# FASCICULE DE BREVET EUROPEEN

(11) **EP 2 418 416 B1**
(45) Date de publication et mention de la délivrance du brevet: **08.05.2019**
(21) Numéro de dépôt: 11290365.3
(22) Date de dépôt: 08.08.2011
(51) Int. Cl.: F21S 2/00, F21S 8/04, H05B 37/02, F21V 23/04, F21W 131/402, F21Y 115/10

(54) **Système d'éclairage intelligent et auto-adaptatif, et kit de réalisation d'un tel système**
Intelligentes und selbstanpassendes Beleuchtungssystem und Bausatz zur Umsetzung eines solchen Systems
Intelligent, self-adapting lighting system and kit for manufacturing such a system

(30) Priorité: 09.08.2010 FR 1003314
(43) Date de publication de la demande: 15.02.2012
(73) Titulaire: Société de Force et Lumière Electriques, 93200 Saint-Denis (FR)
(72) Inventeur: Grave, Jean-Michel, 59249 Fromelles (FR); Passchier, Emmanuel, 59155 Faches Thumesnil (FR)
(74) Mandataire: Plaçais, Jean Yves

(56) Documents cités:
- US-A1- 2002 141 181
- US-A1- 2006 076 908
- US-A1- 2006 278 808

## Description

L'invention a trait à un système d'éclairage destiné à équiper une pièce, un hall, et plus généralement tout local, qu'il soit dédié au travail ou non. Elle concerne en outre un kit pour la réalisation d'un tel système.

Le document US2006/0076908 A1 montre des exemples de systèmes d'éclairage comprenant des unités d'éclairage pilotées en intensité ou/et en couleur par un contrôleur.

Depuis longtemps, on cherche à réduire les coûts énergétiques induit par l'éclairage des locaux. D'abord envisagée sous un aspect purement économique, cette réduction s'inscrit aujourd'hui dans le cadre d'une démarche dite "citoyenne", qui tend de manière générale à économiser "l'énergie" autant que possible.

Traditionnellement, lorsqu'on décide de réduire les coûts d'éclairage, on cherche à utiliser des sources lumineuses à consommation réduite, ou du moins inférieure à l'existant. Cette démarche présente certaines limites.

D'abord, elle implique de remplacer des sources lumineuses fonctionnellement opérantes par de nouvelles, technologiquement plus avancées, moins consommatrices de courant. Assez souvent, les économies financières réalisées en diminuant la consommation électrique de l'éclairage se trouvent annulées par les coûts engendrés par les opérations de remplacement.

Ensuite, une telle démarche est, en pratique, particulièrement sensible aux développements technologiques en matière de sources lumineuses, et à leur acceptation par le marché de l'éclairage. Les sources lumineuses technologiquement innovantes sont généralement très coûteuses au moment de leur mise sur le marché, et elles ne deviennent abordables qu'après s'être largement développées, ce qui peut prendre un temps important.

Enfin, malgré les bénéfices réels que l'on peut tirer de l'utilisation de sources lumineuses à plus faible consommation électrique, on comprend assez facilement qu'il ne s'agit là que d'une piste possible, qui mérite d'être complétée par d'autres mesures visant à économiser l'énergie. Par exemple, on a pris l'habitude de dimensionner un système d'éclairage de façon qu'il éclaire l'ensemble du local auquel il est destiné de manière homogène. En d'autres termes, on recherche un niveau d'éclairement identique en tout point du local. Or, en pratique, seuls quelques lieux spécifiques nécessitent un niveau d'éclairement relativement important, par exemple au droit des postes de travail. Généralement, le reste du local peut se contenter d'un niveau d'éclairement inférieur.

Partant de ce constat, la norme française NFX 12464-1, qui est récente, préconise d'éclairer tout local de travail à un niveau d'éclairement dit "de fond" sur l'ensemble de son étendue, par exemple de 200 lux, et de prévoir une zone d'éclairement renforcé uniquement au droit de chacun des postes de travail du local, par exemple compris entre 300 et 500 lux.

On note que le principe général de cette norme peut être transposé à des pièces destinées à un usage autre que professionnel.

Cependant, tout local, de travail ou autre, est susceptible d'évolutions concernant non seulement son mobilier, en particulier un ou plusieurs plans de travail, (disposition et type), mais encore, et à titre non limitatif, le revêtement de ses murs ou de son sol.

Appliquée strictement, la norme précitée impliquerait de redimensionner et de reconstruire un système d'éclairage à chaque déplacement/remplacement d'un plan de travail. Cela n'est pratiquement pas envisageable, du moins avec les systèmes d'éclairage actuels. Une autre piste consisterait à répartir uniformément, sur l'ensemble de la pièce, des dispositifs d'éclairage capables chacun de produire un éclairement de niveau "renforcé", et à prévoir un dispositif capable de commander chaque dispositif en fonction de sa position dans la pièce. Un tel dispositif apparaît très compliqué à mettre en oeuvre. En outre, le système d'éclairage serait manifestement surdimensionné.

L'invention vise à améliorer la situation.

Le système d'éclairage proposé comprend un jeu de premières dalles lumineuses suspendues, réparties selon un motif régulier, un jeu de secondes dalles lumineuses suspendues, intercalées dans ledit motif régulier, un jeu de capteurs de lumière opérant chacun sous une dalle lumineuse respective, à une hauteur prédéfinie, une pluralité de modules de commande capables chacun de commander en courant une dalle lumineuse respective, un contrôleur capable de commander conjointement les modules de commande des premières et secondes dalles. Il est remarquable en ce que les modules des premières dalles sont munis d'un premier état, où ils exécutent chacun une première loi primaire commandant un niveau de courant calculé de manière que les premières dalles produisent conjointement un premier niveau d'éclairement nominal sur une zone d'éclairement prédéfinie, de manière sensiblement uniforme, ainsi que d'un second état, où chaque module exécute une première loi secondaire commandant un niveau de courant respectif calculé sur la base d'une comparaison entre l'éclairement mesuré sous la dalle respective et une première valeur de consigne respective, que les modules des secondes dalles sont munis d'un premier état, où ils exécutent chacun une seconde loi primaire commandant un niveau de courant calculé de manière que les secondes dalles produisent un second niveau d'éclairement sur une ou plusieurs sous-zones à l'intérieur de ladite zone d'éclairement prédéfinie, ainsi que d'un second état où chaque module exécute une seconde loi secondaire commandant un niveau de courant respectif calculé sur la base d'une comparaison entre l'éclairement mesuré sous la dalle respective et une seconde valeur de consigne respective, et en ce que le contrôleur est agencé pour commander conjointement les modules de commande des premières et secondes dalles d'abord dans leur premier état, en mémorisant les niveaux d'éclairement mesurés sous les dalles lumineuses par leurs capteurs respectifs, puis pour commuter certains au moins des modules de commande vers le second état, avec des valeurs de consigne calculées, en partie au moins, sur la base des niveaux d'éclairement mémorisés.

Le kit proposé comprend un jeu de premières dalles lumineuses aptes à être suspendues, un jeu de secondes dalles lumineuses aptes à être suspendues, un jeu de capteurs de lumière, une pluralité de modules de commande destinés chacun à commander en courant une dalle lumineuse respective, un contrôleur apte à commander conjointement les modules de commande des premières et secondes dalles. Il est remarquable en ce que les modules destinés aux premières dalles sont munis d'un premier état, où ils exécutent chacun une première loi primaire commandant un niveau de courant calculé en vue de produire un premier niveau d'éclairement nominal, ainsi que d'un second état, où ils exécutent chacun une première loi secondaire commandant un niveau de courant respectif calculé sur la base d'une comparaison entre une valeur d'éclairement mesurée et une première valeur de consigne respective, que les modules destinés aux secondes dalles sont munis d'un premier état, où ils exécutent chacun une seconde loi primaire commandant un niveau de courant calculé en vue de produire un second niveau d'éclairement, ainsi que d'un second état, où ils exécutent chacun une seconde loi secondaire commandant un niveau de courant respectif calculé sur la base d'une comparaison entre un éclairement mesuré et une seconde valeur de consigne respective, et en ce que le contrôleur est agencé de manière à pouvoir commander conjointement les modules de commande destinés aux premières et secondes dalles d'abord dans leur premier état, en mémorisant des niveaux d'éclairement mesurés par des capteurs respectifs, puis pour commuter certains au moins des modules de commande vers le second état, avec des valeurs de consigne calculées, en partie au moins, sur la base des niveaux d'éclairement mémorisés.

En premier lieu, le système d'éclairage proposé permet de répondre favorablement aux préconisations de la norme précitée. Les premières dalles lumineuses sont agencées de manière à générer un éclairement "de fond" d'un niveau prédéfini, tandis que les secondes dalles lumineuses sont agencées de manière à générer ponctuellement des zones à éclairement "renforcé", en des positions déterminées de la pièce. Les secondes dalles peuvent être aisément déplacées en cas de modification de la disposition d'un plan de travail, sans avoir à réinstaller entièrement l'ensemble du système d'éclairage.

Étant donné, par exemple, un local dans lequel est logé un poste de travail, dont la superficie est connue, il est aisé de déterminer le nombre respectif de premières dalles et de secondes dalles à prévoir. Les secondes dalles sont disposées par rapport au poste de travail. En cas de déplacement de ce dernier, seules ces secondes dalles sont à déplacer. Le nombre de premières et secondes dalles et leurs caractéristiques lumineuses se trouvent indépendants de la disposition du local.

Il est possible d'équiper les premières et secondes dalles de dispositifs d'éclairage analogues, en type et/ou en puissance, ou différents, mais de type et de puissance très voisins. Ceci présente un avantage industriel certain.

Chaque dalle lumineuse est régulée quant à son intensité lumineuse et donc à sa consommation énergétique. Une ligne de commande commune à l'ensemble des dalles du local est prévue, ce qui facilite grandement le déploiement du système d'éclairage.

La régulation tient compte de l'environnement de chaque dalle lumineuse, tel que créé par les dalles lumineuses voisines, et les murs, la position et le type du mobilier entre autres choses. Cette régulation est réadaptée à chaque fois qu'une modification intervient dans l'un de ces éléments, en commandant le basculement des modules de commande dans leur premier état de fonctionnement. Le système proposé se trouve donc facilement adaptable, plus précisément auto-adaptable.

Cette régulation tient compte automatiquement de modifications intervenant dans les conditions d'éclairement elles-mêmes, telles qu'un levé de jour, un épisode nuageux, une tombée de nuit, une installation temporaire d'un dispositif d'éclairage d'appoint, une dalle lumineuse défectueuse et autres.

Le système d'éclairage proposé permet le respect permanent, au plus juste, des niveaux d'éclairement préconisés par la norme, ou de tout autre niveau d'éclairement prédéfini, garantissant ainsi une consommation énergétique minimale.

Le système d'éclairage proposé réduit les effets d'ombres et de contrastes. Il est capable de restituer une ambiance lumineuse de type "lumière du jour".

D'autres caractéristiques de l'invention, complémentaires ou de substitution, sont énoncées ci-après.
- Certaines au moins des premières dalles lumineuses et des secondes dalles lumineuses sont réalisées sous la forme de dalles de faux plafond équipées d'un ou plusieurs dispositifs d'éclairage.
- Certaines au moins des premières dalles lumineuses et des secondes dalles lumineuses sont équipées de dispositifs d'éclairages à diodes électroluminescentes.
- Certains au moins des capteurs de lumière sont intégrés dans leur dalle lumineuse respective.
- Les premières dalles lumineuses et les secondes dalles lumineuses présentent des dimensions d'encombrement analogues les unes aux autres.
- Les premières dalles lumineuses présentent des puissances d'éclairement théorique analogues les unes aux autres, les secondes dalles lumineuses présentent des puissances d'éclairement théorique analogues les unes aux autres, et la puissance d'éclairement théorique des secondes dalles est supérieur à la puissance d'éclairement théorique des premières dalles.
- Chacune des premières dalles et des secondes dalles présente au moins deux connecteurs électriques et les dalles sont reliées les unes aux autres par l'intermédiaire de ces connecteurs.
- Le premier niveau d'éclairement nominal est sensiblement inférieur au second niveau d'éclairement.
- Le premier niveau d'éclairement nominal est voisin de 200 lux tandis que le second niveau d'éclairement est voisin de 500 lux.

D'autres caractéristiques et avantages de l'invention apparaîtront à l'examen de la description détaillée ci-après, et des dessins annexés sur lesquels :
- la figure 1 représente une structure de faux plafond en vue de dessous ;
- la figure 2 représente une dalle de faux plafond d'un premier type, en vue de dessous ;
- la figure 3 représente la dalle de la figure 2, en coupe suivant une ligne III-III ;
- la figure 4 représente une dalle de faux plafond d'un second type, en vue de dessous ;
- la figure 5 représente la dalle de la figure 4, en coupe suivant une ligne IV-IV ;
- la figure 6 représente un diagramme fonctionnel illustrant un système de commande de dalles lumineuses ;
- la figure 7 représente schématiquement un module de commande de dalle lumineuse d'un premier type ;
- la figure 8 représente schématiquement un module de commande de dalle lumineuse d'un second type ;
- la figure 9 représente un diagramme illustrant un premier état de fonctionnement du module de la figure 7 ;
- la figure 10 un diagramme illustrant un second état de fonctionnement du module de la figure 7 ;
- la figure 11 représente un ordinogramme illustrant une première loi de commande pour le module de la figure 7;
- la figure 12 représente un ordinogramme illustrant une seconde loi de commande pour le module de la figure 7;
- la figure 13 représente un ordinogramme illustrant le fonctionnement d'un contrôleur principal de modules de commande de dalles lumineuses ;
- la figure 14 représente un diagramme d'éclairement correspondant à la structure de faux plafond de la figure 1 ;
- la figure 15 représente un graphique illustrant l'évolution de signaux de contrôle d'un module de commande de dalle lumineuse sur une première période temporelle ; et
- la figure 16 représente un graphique illustrant l'évolution des signaux de contrôle de la figure 15 sur une seconde période temporelle.

Les dessins annexés comprennent des éléments de caractère certain et pourront donc non seulement servir à compléter l'invention, mais aussi contribuer à sa définition, le cas échéant.

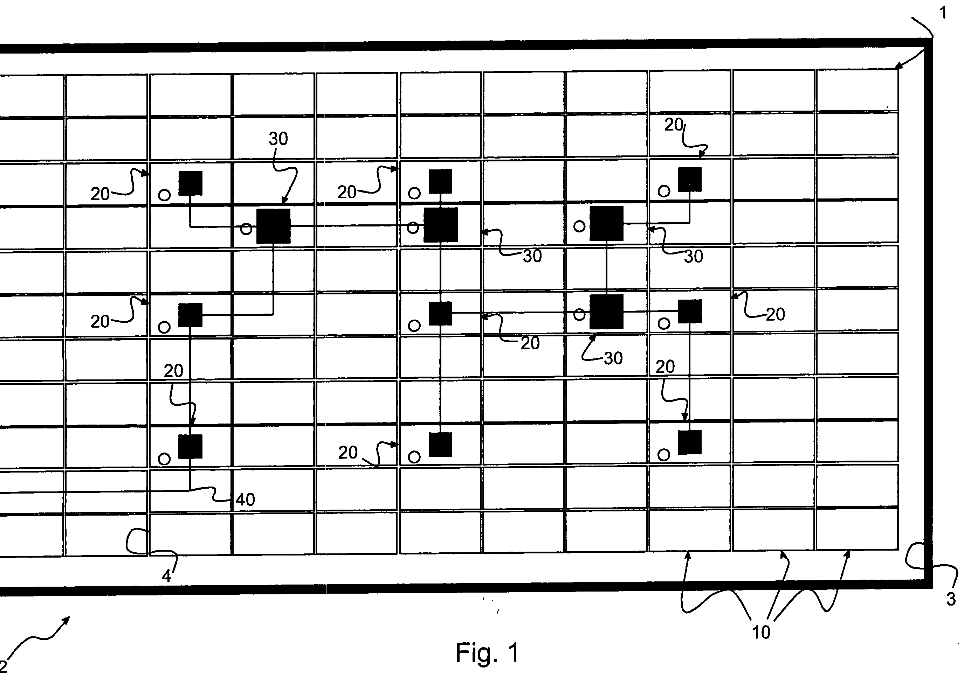

La figure 1 montre une structure de faux plafond 1 couvrant un local 2, lequel est délimité par des parois d'enceinte 3. À titre d'exemple uniquement, le local 2 présente ici une allure parallélépipédique, et le plafond une forme rectangulaire.

Le local 2 peut être dédié à usage professionnel : il peut s'agir d'un bureau, d'une salle de conférence, d'un hall d'accueil du public ou autre. Dans ce cas, le local 2 est soumis à des normes strictes qui régissent son éclairement.

Le local 2 pourrait également être dédié à l'habitation ou à tout autre usage. Dans ce cas, l'éclairement du local 2 peut faire l'objet d'une attention particulière, en ce qui concerne sa consommation électrique et/ou son confort visuel.

La structure de faux plafond 1 comprend une armature de soutien 4 pour des dalles de faux plafond. Classiquement, l'armature 4 peut être suspendue au véritable plafond du local 2.

L'armature 4 peut comprendre une pluralité de profilés métalliques, régulièrement répartis suivant la longueur et la largeur du local 2. L'armature 4 forme alors un maillage régulier, disposé au-dessus au sol du local 2, et qui s'étend pratiquement sur l'ensemble de la surface au sol de ce local 2.

Chaque maille de l'armature 4 supporte une dalle de faux plafond de forme correspondante, ici généralement rectangulaire.

La structure de faux plafond 1 comprend une pluralité de dalles classiques 10, réalisées chacune sous la forme d'un panneau de matière plein.

La structure de faux plafond 1 comprend en outre plusieurs dalles lumineuses d'un premier type 20, lesquelles sont réparties sur pratiquement toute l'étendue au sol du local 2, selon un motif régulier.

Avantageusement, ce motif est déterminé de telle façon que chaque point d'un plan généralement parallèle au plancher du local puisse être éclairé par plusieurs dalles lumineuses simultanément. On diminue ainsi les effets d'ombre et l'on améliore le confort des usagers.

Chaque point bénéficie alors du flux lumineux de plusieurs dalles, chacune d'elle contribuant à atteindre un niveau d'éclairement prédéterminé en ce point, par exemple 200 lux.

Par motif régulier, on entend avant tout une disposition telle que les dalles soient réparties de façon à couvrir de manière homogène l'ensemble de l'étendue au sol de la pièce. Le motif de répartition des dalles lumineuses du premier type 20 tient par conséquent compte de la forme de la pièce, en particulier au sol.

L'ensemble des dalles du premier type 20 se trouve capable de produire un éclairage sur sensiblement l'ensemble du local 2.

Telle qu'illustrée sur la figure 1, la structure de faux plafond 1 comprend neuf dalles lumineuses du premier type 20, réparties en trois alignements longitudinaux de trois dalles et en trois alignements transversaux de trois dalles également.

La structure de faux plafond 1 comprend encore une ou plusieurs dalles lumineuses d'un second type 30, intercalées dans le motif régulier des dalles du premier type 20, en des positions déterminées.

Chaque dalle lumineuse du second type 30 est capable de produire un éclairement renforcé en une position déterminée du local 2.

Les dalles lumineuses du second type 30 sont avantageusement positionnées en fonction des éléments de mobilier présents dans le local 2. En particulier, une ou plusieurs dalles du second type 30 peuvent être disposées, de préférence de façon régulièrement réparties, au-dessus de chaque plan de travail présent dans le local 2. Une table, un bureau ou encore une planche à dessin sont des exemples de plans de travail.

Telle qu'illustrée sur la figure 1, la structure de faux plafond 1 comporte quatre dalles lumineuses du second type 30, réparties selon un alignement longitudinal de trois dalles et un alignement transversal de deux dalles, en extrémité de l'alignement longitudinal.

L'alignement transversal est intercalé entre deux alignements transversaux de dalles du premier type 20, tandis que l'alignement longitudinal est intercalé entre deux alignements longitudinaux de dalles du premier type 20.

L'ensemble des dalles du premier type 20 et des dalles du second type 30 équipant le faux plafond 1 sont électriquement reliées les unes aux autres, au moyen d'un chemin de câbles 40. De préférence, le câble 40 sert à la fois au transport du courant électrique nécessaire au fonctionnement des dalles lumineuses et à la transmission de signaux de commande à destination de ces dalles lumineuses.

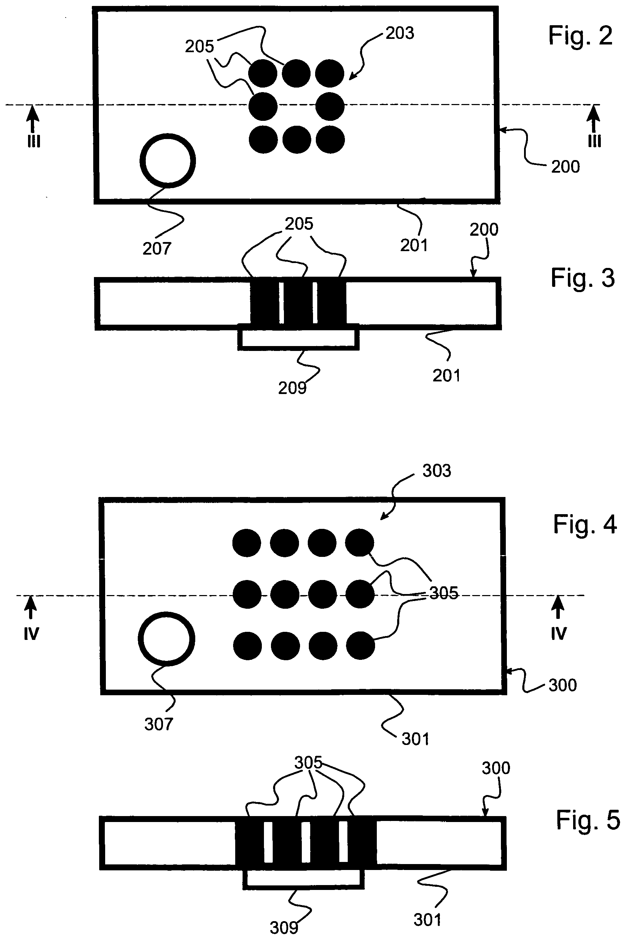

Les figures 2 et 3 montrent une première dalle lumineuse 200 en tant qu'exemple de réalisation d'une dalle du premier type 20.

La première dalle 200 est réalisée à partir d'un panneau de matière plein 201, dans lequel est logé un dispositif d'éclairage 203. Le panneau de matière 201 de la première dalle 200 présente avantageusement des dimensions d'encombrement, ou du moins des dimensions de longueur et de largeur, voisines des panneaux des dalles classiques 10. Ceci autorise d'abord l'utilisation d'une armature 4 régulière. Ceci permet ensuite de disposer des dalles lumineuses en remplacement d'une dalle classique. En particulier, il devient possible d'intervertir une dalle lumineuse du premier type et une dalle classique, à volonté.

Le dispositif d'éclairage 203 comprend un ou plusieurs éléments lumineux 205. Par exemple, le dispositif d'éclairage 203 comprend ici neuf éléments lumineux 205 ponctuels, répartis suivant un contour d'allure générale carrée.

Avantageusement, chaque élément lumineux 205 comprend une ou plusieurs diodes électroluminescentes, lesquelles présentent une très faible consommation électrique.

Par exemple, chaque élément lumineux 205 peut comprendre une diode électroluminescente d'une puissance nominale de 1,3 watt.

Chaque élément lumineux 205 se trouve pour l'essentiel logé dans l'épaisseur du panneau da matière 201. Avantageusement, chaque élément lumineux 205 traverse l'épaisseur du panneau de matière 201 en sorte qu'un mécanisme de commande (non représenté) peut être logé, en partie au moins, au-dessus de la structure de faux plafond 1.

De préférence, chaque élément lumineux comprend au moins un dispositif optique du type décrit dans la demande de brevet français publiée sous le numéro 2 923 581, au nom de la Demanderesse, lequel permet d'obtenir une répartition homogène de la lumière dans un plan situé à une distance choisie de la diode électroluminescente.

Dans ce cas, chaque dalle lumineuse produit un flux lumineux constant à l'intérieur de son cône d'éclairement respectif, si bien que le flux lumineux arrosant le local 2 se trouve à peu près constant dans une zone de très large étendue.

Le niveau d'éclairement souhaité peut être proche de 200 lux par exemple. À partir des mêmes dalles lumineuses, il suffit de revoir la densité du motif régulier pour faire varier l'intensité lumineuse dans le local 2.

La première dalle lumineuse 200 peut s'inspirer de la dalle lumineuse décrite dans la demande de brevet français publiée sous le numéro 2 911 946 au nom de la Demanderesse.

La première dalle 200 comprend en outre un capteur de lumière 207, qui peut être logé, en partie au moins, dans l'épaisseur du panneau de matière 201. Le capteur de lumière 207 est réglé de manière à mesurer une valeur d'éclairement sous sa dalle respective, à une distance d'éloignement par rapport à cette dalle qui est choisie. Cette distance peut être déduite de la hauteur du faux plafond 1 par rapport au sol du local 2 et de la hauteur du plan dans lequel on souhaite obtenir un éclairement de référence. Cette hauteur est généralement fixée par des normes, en particulier lorsque le local est à usage professionnel. Par exemple, la distance en question peut être choisie de manière que le capteur de lumière soit capable de donner une mesure de niveau d'éclairement dans un plan situé à une hauteur de soixante-dix centimètres par rapport au sol.

De préférence, le capteur de lumière 207 est agencé de manière à mesurer un niveau d'éclairement à l'aplomb de sa dalle lumineuse respective. Il est de préférence disposé au voisinage du dispositif d'éclairage 203 ou au sein de celui-ci. Il peut cependant se trouver excentré par rapport à cette dalle.

Avantageusement, le capteur de lumière 207 présente un champ de mesure qui correspond à peu près au cône d'éclairement de sa dalle respective.

La première dalle 200 comprend encore un ou plusieurs connecteurs électriques désignés dans leur ensemble par la référence 209.

Les connecteurs 209 permettent de relier chaque première dalle 200 à une dalle analogue ou du moins pourvue d'un connecteur compatible. Ces connecteurs 209 sont agencés de manière à recevoir/transmettre à la fois l'énergie électrique nécessaire au fonctionnement du dispositif lumineux 203, ou d'un dispositif homologue, et des signaux en vue de commander de tels dispositifs, directement ou par l'intermédiaire d'un mécanisme de commande (non représenté). Le cas échéant, les connecteurs 209 peuvent être agencés pour recevoir des signaux électriques provenant d'un dispositif de commande.

Par exemple, les connecteurs électriques 209 sont disposés en position médiane suivant la longueur de cette dalle. De préférence, ces connecteurs sont au nombre de trois ou de quatre, ce qui offre à chaque dalle lumineuse la possibilité d'être reliée à chacune des dalles qui lui sont adjacentes.

Les figures 4 et 5 montrent une seconde dalle lumineuse 300 en tant qu'exemple de réalisation d'une dalle du second type 30.

La seconde dalle 300 est réalisée à partir d'un panneau de matière plein 301 d'allure parallélépipédique, dans lequel est logé un dispositif d'éclairage 303.

Le panneau de matière 301 de la seconde dalle 300 présente avantageusement des dimensions d'encombrement, ou du moins des dimensions de largeur et de longueur, voisines des dimensions de celle des dalles classiques 10 et/ou des dalles lumineuses du premier type 20.

Il est possible d'intervertir, à volonté, les dalles classiques 10, du premier type 20 et du second type 30, selon une répartition d'éclairement choisie. En particulier, lorsque le mobilier présent dans le local 2 est déplacé, il est possible de déplacer les dalles en conséquence. Par exemple, en même temps que l'on déplace un plan de travail, on peut déplacer la ou les dalles lumineuses du second type 30 situées au-dessus de lui.

Autrement dit, en chaque maille de l'armature 4, il est possible, au choix, de disposer soit une dalle classique 10, soit une dalle lumineuse du premier type 20, soit une dalle lumineuse du second type 30.

Le dispositif d'éclairage 303 comprend une pluralité d'éléments lumineux 305, comprenant ici chacun au moins une diode électroluminescente.

Tel qu'illustré sur les figures 4 et 5, le dispositif d'éclairage 303 comprend 12 éléments lumineux 305, comprenant chacun une diode électroluminescente, répartis suivant un contour généralement rectangulaire, et à l'intérieur de ce contour.

Par exemple, la puissance des diodes électroluminescentes intégrées au dispositif d'éclairage 303 de la seconde dalle 300 peut être voisine de celle des diodes intégrées au dispositif d'éclairage 203 de la première dalle 200.

La seconde dalle 300 comprend encore un capteur de lumière 307, au moins partiellement logé dans l'épaisseur du panneau de matière 301, et plusieurs connecteurs électriques 309 avantageusement compatibles avec les connecteurs électriques 209 de la première dalle 200.

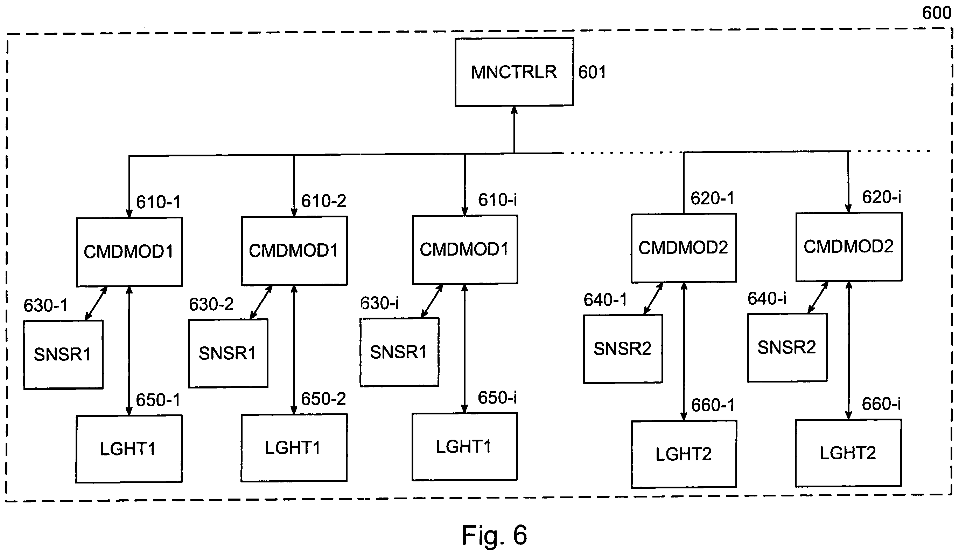

La figure 6 montre un système de commande 600 pour un ensemble de dalles lumineuses, par exemple les dalles lumineuses du premier type 20 et du second type 30 équipant la structure de faux plafond 1.

Le système de commande 600 comprend un contrôleur principal 601 relié à une pluralité de premiers modules de commande 610-1, 610-2, ... 610-i (i valeur entière allant de 1 au nombre total de premiers modules de commande) d'un premier type, ainsi qu'à une pluralité de modules de commande 620-1,... 620-j (j valeur entière allant de 1 au nombre total de seconds modules de commande) d'un second type.

Le contrôleur principal commande conjointement les modules du premier type 610-i, ou premiers modules, et du second type 620-j, ou seconds modules.

Chaque premier module 610-i est relié à un capteur de lumière 630-i respectif, ainsi qu'au dispositif lumineux 650-i d'une dalle lumineuse respective, par exemple une dalle lumineuse du premier type 20.

Chaque premier module de commande 610-i peut recevoir des signaux de mesure de niveau d'éclairement et commander l'intensité lumineuse du dispositif lumineux 650-i auquel il est relié. Ce dispositif lumineux 650-i peut être commandé en fonction du niveau d'éclairement mesuré sous sa dalle respective.

Chaque second module de commande 620-j est relié à un capteur de lumière 640-j, ainsi qu'au dispositif lumineux 660-j d'une dalle lumineuse respective, par exemple une dalle lumineuse du second type 30.

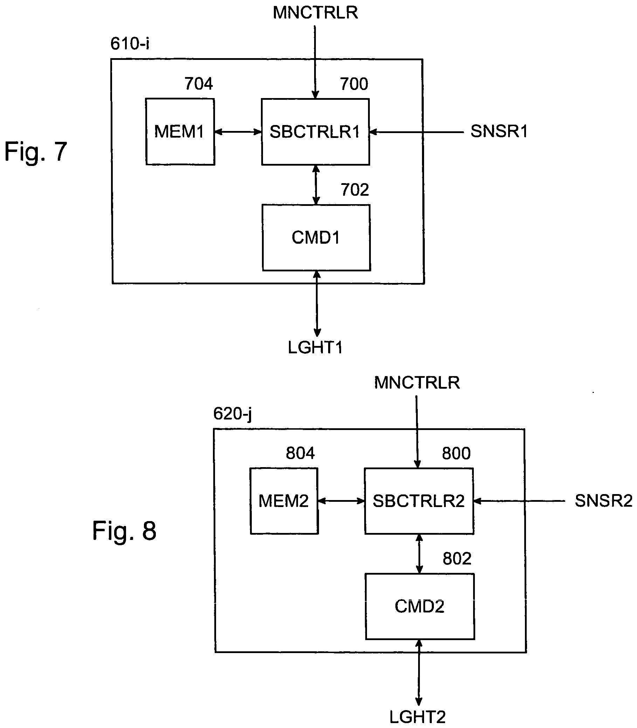

La figure 7 montre un exemple de réalisation d'un premier module de commande 610-i.

Le premier module de commande 610-i comprend un contrôleur, agissant en tant que sous-contrôleur 700 ou contrôleur secondaire dans le système de commande 600. Le sous-contrôleur 700 est capable de recevoir des signaux de commande du contrôleur principal 600 et des signaux de mesure de son capteur de lumière 630-i respectif.

Le module de commande 610-i comprend en outre un dispositif de commande spécifique 702 capable de faire varier l'intensité lumineuse du dispositif d'éclairage 650-i auquel il est relié. Le dispositif de commande spécifique 702 est relié au sous-contrôleur 700 avec possibilité d'échange de signaux de commande.

Le module de commande 610-i comprend encore de la mémoire 704, dans laquelle le sous-contrôleur 700 peut lire et écrire des données utiles. La mémoire 704, qui est représentée ici de façon distincte du sous-contrôleur 700, peut être, en pratique, physiquement intégrée sur un microcontrôleur également configuré en tant que sous-contrôleur 700.

Le sous-contrôleur 700 est doté de deux états de fonctionnement différents l'un et l'autre. Le sous-contrôleur 700 peut être basculé de l'un de ces états de fonctionnement à l'autre à réception d'un signal de commutation émis par le contrôleur principal 600.

La figure 8 montre en détail un exemple de réalisation d'un second module de commande 620-j.

Le second module de commande 620-j est ici réalisé sous une forme analogue au premier dispositif de commande 610-i. En particulier, le second module de commande 620-j comprend un sous-contrôleur 800, un dispositif de commande spécifique 802 dédié au dispositif d'éclairage 660-j auquel il est relié, et de la mémoire 804.

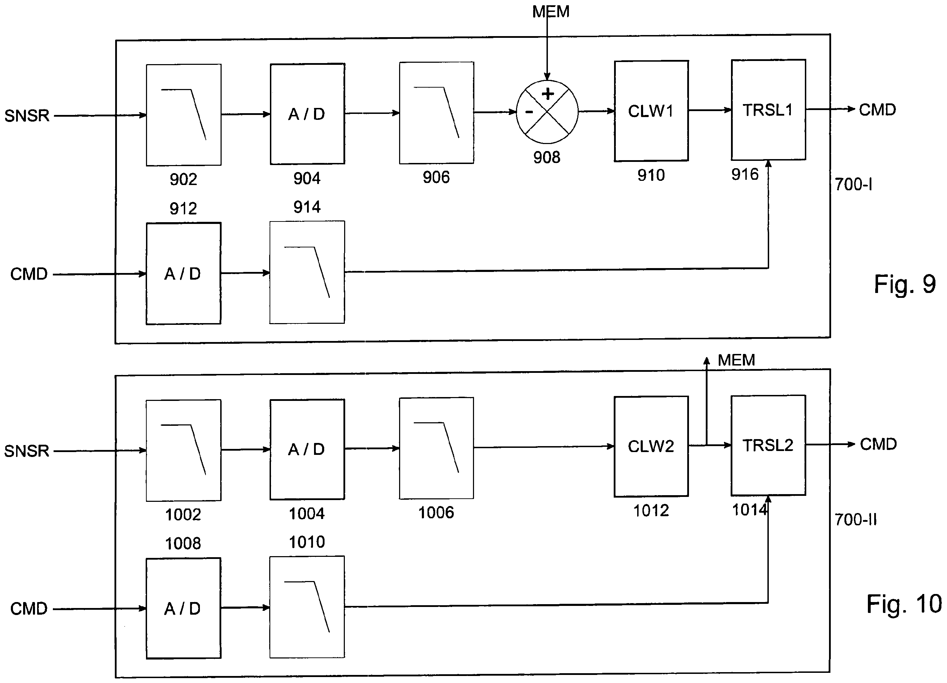

La figure 9 illustre un premier état de fonctionnement du sous-contrôleur 700 d'un premier module de commande 610-i. Dans cet état, le sous-contrôleur 700 porte la référence 700-I.

Le contrôleur 700-I traite les signaux reçus de son capteur de mesure 630-i respectif au travers d'un premier filtre passe bas 902, d'un premier convertisseur analogique numérique 904 et d'un second filtre passe bas 906, de type numérique, successivement.

La sortie du second filtre passe bas 906 est reliée à une première entrée d'un comparateur 908. La seconde entrée de ce comparateur 908 est reliée à la mémoire 704 du premier module de commande 610-i. Le comparateur 908 délivre un signal de sortie représentatif de la différence entre un signal de mesure de niveau d'éclairement, noté Emes, et une valeur de niveau d'éclairement, notée Emem, contenue dans la mémoire 704.

La sortie du comparateur 908 est reliée à l'entrée d'un calculateur 910 exécutant une première loi de commande. Cette première loi de commande établit une valeur de consigne d'intensité lumineuse Lcng à partir d'une différence entre le niveau d'éclairement mesuré Emes et le niveau d'éclairement mémorisé Emem.

Le contrôleur 700-I traite également des signaux reçus de son dispositif de commande spécifique 702 respectif au travers, successivement, d'un second convertisseur analogique/numérique 912 et d'un troisième filtre passe bas 914 de type numérique. Les signaux reçus du dispositif de commande spécifique 702 concernent l'intensité du courant électrique alimentant le dispositif lumineux correspondant.

La sortie du troisième filtre 914 et la sortie du calculateur 910 sont reliées à l'entrée d'un calculateur supplémentaire 916, capable d'établir un signal interprétable par le dispositif de commande spécifique 702 à partir de la valeur de consigne d'intensité lumineuse Lcng et de l'intensité du courant alimentant le dispositif d'éclairage 650-i commandé.

Dans son premier état, le sous-contrôleur 800 fonctionne de façon analogue au sous-contrôleur 700-I.

La figure 10 illustre un second état de fonctionnement du sous-contrôleur 700, référencé 700-II.

Le contrôleur 700-II traite les signaux reçus de son capteur de lumière 630-i respectif au travers, successivement, d'un quatrième filtre passe bas 1002, d'un quatrième convertisseur analogique numérique 1004, d'un cinquième filtre passe bas 1006, de type numérique. Ces éléments de traitement peuvent être physiquement les mêmes que ceux opérant dans le premier état de fonctionnement.

La sortie du cinquième filtre passe bas 1006 est reliée à un calculateur 1008 exécutant une seconde loi de commande, selon laquelle une valeur d'intensité lumineuse de consigne Lcsg est établie.

Le contrôleur 700-II traite également les signaux reçus du dispositif de commande spécifique 702 auquel il est relié, au travers, successivement, d'un cinquième convertisseur analogique/numérique 1010 et d'un sixième filtre passe bas 1012, de type numérique.

La sortie du sixième filtre 1012 et la sortie du calculateur 1008 sont toutes deux reliées à l'entrée d'un second calculateur supplémentaire 1014, capable d'établir un signal interprétable par le dispositif de commande spécifique 702 en fonction d'un niveau d'intensité lumineuse de consigne Lcng et de l'intensité du courant électrique alimentant le dispositif d'éclairage commandé.

Le contrôleur 800, dans son second état, fonctionne de manière analogue au contrôleur 700-II.

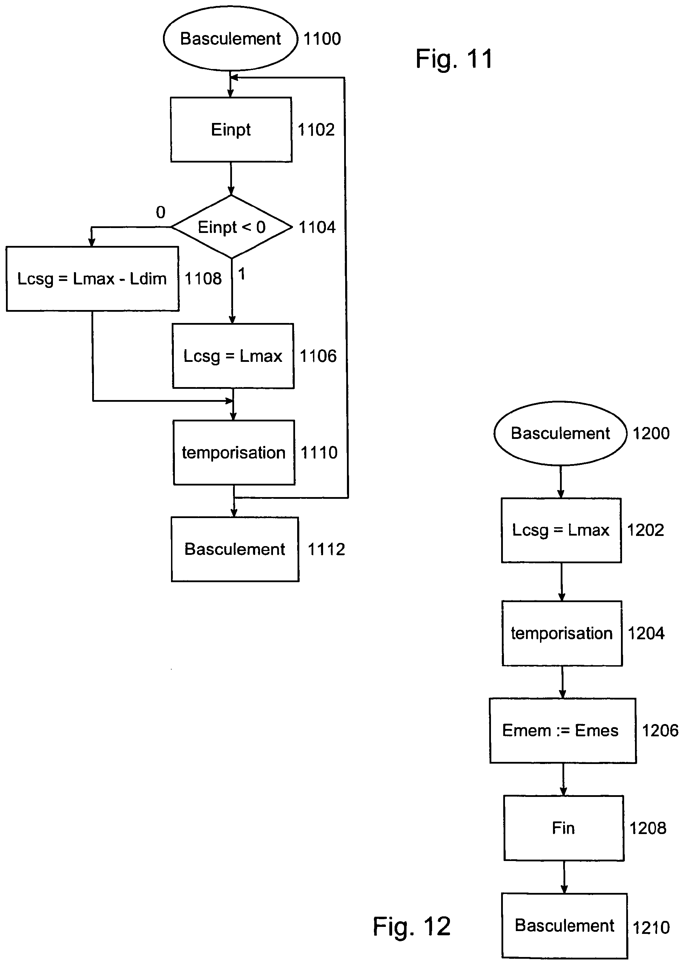

La figure 11 illustre la première loi de commande.

À l'étape 1100, le contrôleur 700 est basculé dans le premier état de fonctionnement, par exemple à la suite de la réception d'un signal de basculement émis par le contrôleur principal 601.

À l'étape 1102, on considère une valeur de niveau d'éclairement d'entrée, notée Einpt. La valeur d'éclairement d'entrée Einpt correspond à une différence entre la valeur de niveau d'éclairement stockée en mémoire, Emem, et la valeur de niveau d'éclairement mesuré Emes.

À l'étape 1104, on détermine si la valeur d'éclairement d'entrée Einpt est négative.

Si oui, alors on détermine une valeur d'intensité lumineuse de consigne Lcsg à une valeur proche d'une intensité maximale Lmax du dispositif d'éclairage (étape 1106). Cette intensité maximale peut être réelle ou prédéterminée, dans le sens où elle correspond à une proportion de l'intensité maximale réelle du dispositif d'éclairage.

Sinon, on détermine une proportion de l'intensité actuelle en tant que valeur de consigne Lcsg (étape 1108), c'est-à-dire que l'intensité maximale Lmax diminuée d'une intensité déterminée Ldim.

Après chacune des étapes 1106 et 1108, on observe une étape de temporisation prédéterminée 1110, puis on recommence à l'étape 1102, jusqu'à ce qu'un signal émis par le contrôleur principal 601 fasse basculer le sous-contrôleur 700 dans son second mode de fonctionnement.

Ce premier mode de fonctionnement, où le sous-contrôleur 700 exécute une première loi de commande, peut être vu comme un mode de fonctionnement régulé, dans lequel la valeur d'éclairement mémorisée Emem peut être considérée comme une valeur de consigne.

Le figure 12 illustre la seconde loi de commande.

À l'étape 1200, le contrôleur 700 est basculé dans le premier état de fonctionnement, par exemple à la suite de la réception d'un signal de basculement émis par le contrôleur principal 601.

À l'étape 1202, on établit la valeur de consigne Lcsg à une valeur maximale Lmax du dispositif d'éclairage. Cette valeur maximale peut être une valeur maximale effective ou être déterminée, par exemple de façon que l'on obtienne un certain niveau d'éclairement à cette valeur d'intensité.

À l'étape 1204, on temporise pendant un intervalle de temps prédéterminé, par exemple de quelques secondes. On assure ainsi un fonctionnement stable du dispositif d'éclairage. On garantit également que l'ensemble des sous-contrôleurs se trouvent dans cet état de fonctionnement.

À l'étape 1206, on commande l'enregistrement de la valeur mesurée d'éclairement Emes en tant que valeur de référence Emem dans la mémoire.

À l'étape 1208, optionnelle, on émet un signal de synchronisation au contrôleur principal pour dire que l'on a fini.

Finalement, on temporise dans l'attente d'un signal commandant le basculement dans le premier état de fonctionnement (étape 1210).

Ce mode de fonctionnement du sous-contrôleur 700 s'apparente à un mode d'apprentissage.

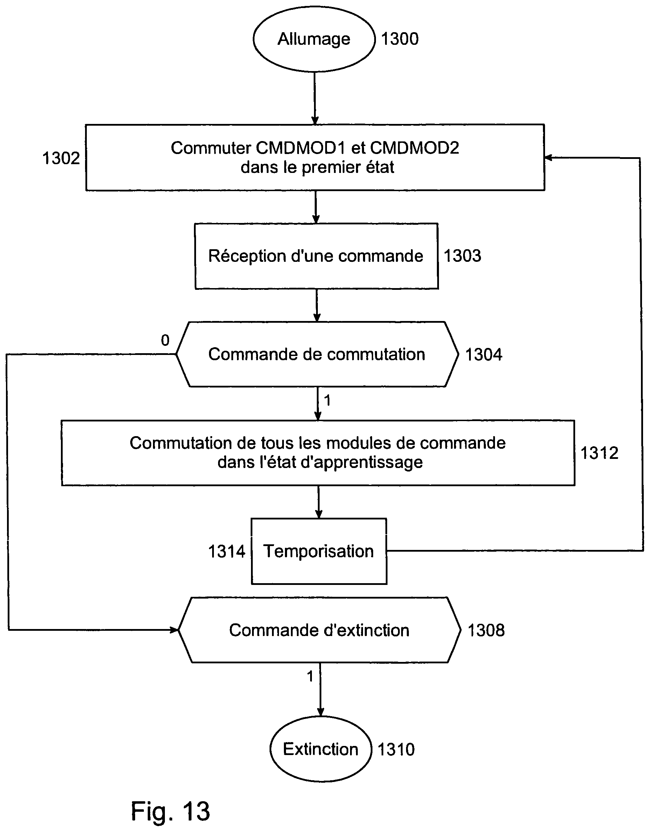

La figure 13 montre le fonctionnement du contrôleur principal 601.

À l'étape 1300, le contrôleur principal 601 est mis en service, manuellement, par exemple à la suite de l'actionnement d'un commutateur situé dans le local 2, ou automatiquement, par exemple, par un déclenchement temporellement programmé.

À l'étape 1302, le contrôleur principal 601 commande le basculement de tous les modules de commande du premier type 610-i et du second type 620-j dans leur premier état de fonctionnement, c'est-à-dire en mode régulé.

À l'étape 1303, le contrôleur principal 601 reçoit une commande.

S'il s'agit d'une commande de commutation (étape 1304), laquelle peut être automatique, programmée ou manuelle, le contrôleur principal 601 bascule tous les modules de commande dans leur second état de fonctionnement, c'est-à-dire d'apprentissage, au cours de l'étape 1312.

Puis vient une étape de temporisation 1314 destinée à assurer que tous les modules lumineux sont bien commandés suivant l'état d'apprentissage.

À réception de la commande de temporisation, on retourne à l'étape 1302 jusqu'à ce qu'une nouvelle commande soit reçue (étape 1303).

Si la commande de l'étape 1303 concerne une commande d'extinction (le test de l'étape 1304 est négatif, celui de l'étape 1308 est positif), alors le système d'éclairage est mis dans un état où aucun éclairage n'est produit (hors tension ou en veille) au cours de l'étape 1310.

Le mode d'apprentissage est de préférence mis en oeuvre de nuit, ce qui permet d'évaluer les performances propres au système d'éclairage.

Ce mode de fonctionnement est commandé à la mise en service initiale du système d'éclairage, puis, optionnellement, à chaque fois que survient un réaménagement du ou des postes de travail et/ou que des modifications apparaissent dans la configuration des premières et/ou secondes dalles.

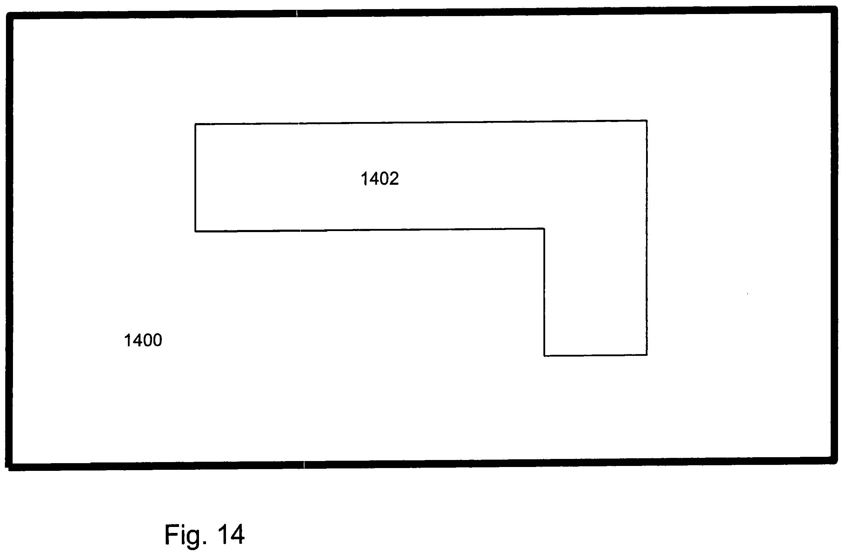

La figure 14 montre que les premières dalles 20 génèrent une première zone d'éclairement 1400 qui correspond à l'étendue au sol du local 2. L'éclairement y est uniforme.

Les secondes dalles 30 génèrent une seconde zone 1402 d'éclairement dont la forme correspond sensiblement à la répartition de ces dalles. Cette seconde zone 1402 peut être utilisée pour l'éclairage d'un plan de travail.

En cas de déplacement de ce plan de travail, on peut déplacer en conséquence les secondes dalles 30 et relancer le processus d'apprentissage des modules de manière à obtenir à nouveau un éclairage optimal.

En d'autres termes, la première zone d'éclairement 1400 et la seconde zone d'éclairement 1402 sont des zones prédéfinies, en fonction desquelles le système d'éclairage est configuré.

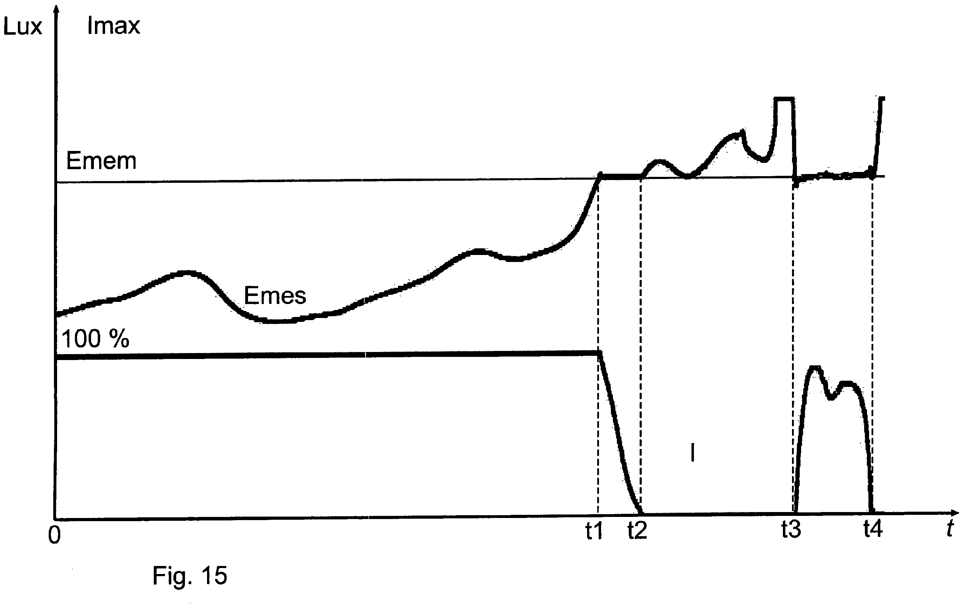

La figure 15 montre à la fois l'évolution de la valeur d'éclairement mesurée Emem par le capteur d'une dalle lumineuse et l'intensité du courant alimentant le dispositif d'éclairage de cette dalle.

Entre une date d'origine et une première date t1, la valeur du niveau d'éclairement mesuré Emes est inférieure à la valeur de niveau d'éclairement mémorisée Emem, si bien que le dispositif d'éclairage est alimenté à un niveau de courant maximal admissible (intensité lumineuse maximale Lmax).

À la date t1, et jusqu'à une seconde date t2, ultérieure, la valeur du niveau d'éclairement mesuré Emes est sensiblement égale à la valeur mémorisée Emem, si bien que l'intensité du courant alimentant le dispositif d'éclairage décroît. Typiquement, cela résulte d'une augmentation de l'apport de lumière naturelle, correspondant par exemple à un levé de soleil.

À la date t2, et jusqu'à une troisième date t3, ultérieure, le dispositif d'éclairage n'est plus alimenté. La lumière naturelle suffit à obtenir le niveau d'éclairement mémorisé. Autrement dit le surplus d'éclairement constaté entre les dates t2 et t3 résulte d'un apport de lumière naturelle et ne consomme donc pas d'énergie électrique.

À la date t3, et jusqu'à une quatrième date t4, ultérieure, le niveau d'éclairement mesuré Emes chute brutalement. Il en résulte une alimentation du dispositif d'éclairage de façon à maintenir le niveau d'éclairement prédéterminé (augmentation du courant d'alimentation).

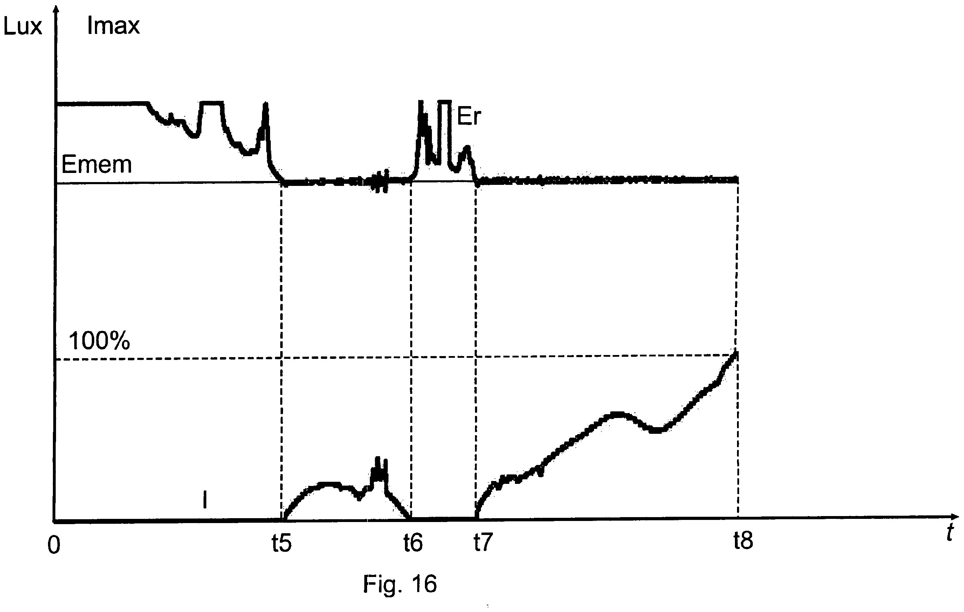

La figure 16 est analogue à la figure 15, mais elle concerne une période temporelle différente.

Entre une date d'origine et une cinquième date t5, ultérieure, la valeur du niveau d'éclairement mesuré Emes est supérieure à la valeur de niveau d'éclairement mémorisée Emem, si bien que le dispositif d'éclairage n'est pas alimenté. Typiquement, ce surplus d'éclairement peut résulter d'un apport de lumière naturelle et ne consomme donc pas d'énergie électrique.

À la date t5, et jusqu'à une sixième date t6, ultérieure, le niveau d'éclairement mesuré Emes chute brutalement. Il en résulte une alimentation du dispositif d'éclairage de façon à maintenir le niveau d'éclairement à la valeur mémorisée Emem. Typiquement, il peut s'agir là d'un épisode nuageux.

À la date t6, et jusqu'à une septième date t7, ultérieure, le dispositif d'éclairage n'est plus alimenté. La lumière naturelle suffit à obtenir un niveau d'éclairement supérieur à la valeur mémorisée Emem. Avantageusement, il est possible de coupler le système d'éclairage à un système de volets commandables électriquement de sorte à obstruer partiellement les entrées de lumière naturelle, afin de conserver un niveau d'éclairement proche de la valeur mémorisée Emem.

À la date t7, et jusqu'à une huitième date t8, ultérieure, l'intensité du courant alimentant le dispositif d'éclairage augmente progressivement pour conserver un niveau d'éclairement mesuré Emes à une valeur sensiblement égale à la valeur mémorisée.

Dans le système décrit ci-dessus, tous les modules de commande d'un même local sont basculés simultanément en un mode "d'apprentissage". Dans ce mode de fonctionnement, chaque module commande sa dalle lumineuse respective à une intensité lumineuse choisie, par exemple voisine du maximum. Chaque capteur lumineux mesure un niveau d'éclairement causé par sa dalle respective et par les autres dalles du système, et influencé par l'environnement (la séquence d'apprentissage est de préférence mise en oeuvre de nuit pour ne pas être perturbée par la lumière naturelle). On acquiert et l'on mémorise ainsi un éclairement maximal que les dalles lumineuses peuvent provoquer dans une disposition particulière. On obtient donc, pour chaque dalle lumineuse, une valeur de niveau d'éclairement qui peut être utilisée en tant que consigne globale. Cette consigne tient compte de l'environnement (flux lumineux résultant de la disposition géographique de toutes les dalles, particularités de réfléchissement du local, d'un plan de travail, ou autre).

Cette consigne correspond au minimum lumineux que chaque dalle doit participer à maintenir, lorsque par exemple la lumière naturelle décline.

Comme l'ensemble des modules de commande est programmé de manière analogue, toutes les dalles d'une zone donnée augmentent, en proportions sensiblement égales, leur consommation énergétique en vue de maintenir le niveau d'éclairement mémorisé.

Lorsque par exemple la lumière naturelle croit, le module de commande réduit l'intensité lumineuse de sa dalle respective et donc sa consommation énergétique de façon à maintenir au plus juste l'éclairement minimum. Ce processus peut se poursuivre jusqu'à l'extinction complète de certaines au moins des dalles, lorsque la lumière naturelle suffit à atteindre le niveau d'éclairement fixé aux endroits correspondant du local 2.

Le système proposé est pratiquement insensible au fait que la répartition lumineuse désirée ne soit pas homogène dans le local. Il importe peu également que chaque dalle, considérée individuellement, ne puisse garantir seule l'éclairement minimum déterminé, puisque chaque dalle a appris cette consigne de son environnement et s'efforce d'y contribuer, à la croissance comme à la décroissance. La consigne, en ce qu'elle correspond à la puissance maximale que le système peut délivrer dans son ensemble, après correction des artifices liés à l'environnement de chaque dalle lumineuse, est à coup sûr atteinte. L'appareil est intelligent et s'adapte à son environnement par apprentissage.

Le système décrit peut intégrer en outre un détecteur de présence pour une extinction systématique en l'absence de personnel dans le local, une commande de gradation de l'intensité lumineuse, par exemple pour des séances de projections visuelles, en particulier dans le cas d'une salle de réunion, une commande supplémentaire centralisée permettant, par exemple, à l'utilisateur de régler finement l'éclairage en fonction de ses besoins propres et/ou être couplé à un réseau de communication, par exemple pour couper l'éclairage du local à distance, en même temps que d'autres locaux, de manière manuelle ou programmée.

L'invention n'est pas limitée aux modes de réalisation décrits plus haut, à titre d'exemple uniquement, mais englobe toutes les variantes que pourra envisager l'homme de l'art.

Au lieu de réagencer les premières et les secondes dalles lumineuses les unes par rapport aux autres, on peut se contenter de réagencer, lorsque cela est possible, uniquement les dispositifs lumineux équipant ces dalles. On peut ainsi prévoir des dispositifs escamotables.

Une même dalle lumineuse peut comprendre deux dispositifs d'éclairage. D'une certaine manière, une telle dalle peut faire fonction à la fois de dalle du premier type et de dalle du second type. Plus généralement, une dalle du second type peut, dans certains cas, être constituée d'une dalle du premier type à laquelle est adjoint un dispositif d'éclairage supplémentaire/complémentaire.

Les dalles du premier type et du second type peuvent être pratiquement identiques, en particulier en ce qui concerne leur capacité d'éclairage, mais être commandées différemment les unes des autres.

Étant donné que le contrôleur principal 601 est capable de recevoir des informations temporelles concernant l'alimentation des dalles lumineuses, il est possible d'obtenir des indications de consommation électrique du système dans son ensemble, c'est-à-dire de l'énergie électrique consommée pour l'éclairage d'un local particulier. Ces informations peuvent être retransmises au travers d'un réseau de communication.

Les dalles lumineuses du premier type 20, par exemple les premières dalles 200, les dalles lumineuses du second type 30, par exemple les secondes dalles 300 peuvent être conditionnées et/ou mises dans le commerce, chacune dans un état assemblé, partiellement assemblé ou non assemblé, en combinaison du contrôleur principal 601, formant ainsi un kit à installer pour réaliser un système d'éclairage. Un tel kit peut être utilisé en combinaison d'un faux plafond existant, auquel cas certaines dalles existantes seront remplacées par des dalles du kit en question. Dans certains cas, les panneaux de matière constitutifs des premières et secondes dalles lumineuses pourront être mis dans le commerce/conditionnés séparément du reste dudit kit. Ceci permet d'offrir une large gamme de dalles, de dimensions (épaisseur, largeur, longueur) différentes, de composition, et/ou de finition différentes les unes des autres, tout en maintenant un stock raisonnable d'éléments d'éclairage et de commande. Rien n'exclut d'ailleurs que ces derniers soient, dans une variante du kit d'installation, commercialisés/conditionnés de manière tout-à-fait indépendante de tout panneau de matière.

L'uniformité de l'éclairement produit sur la première zone et la seconde zone d'éclairement peut être définie de différentes manières, qui toutes entrent dans le cadre de la présente demande. Par exemple, l'uniformité peut être quantifiée sous la forme d'un rapport entre un niveau d'éclairement moyen sur la superficie en question et un niveau d'éclairement maximal sur cette superficie. L'uniformité sur la première zone d'éclairement peut différer de l'uniformité sur la seconde zone d'éclairement. Par exemple, l'uniformité de l'éclairement sur la seconde zone peut être supérieure à 0,7, tandis que l'uniformité de l'éclairement sur la première zone peut être supérieure à 0,5.

Le système d'éclairage décrit permet d'obtenir, dans le local 2, deux zones géographiques sur lesquelles les caractéristiques de l'éclairement diffèrent les unes des autres. Ceci correspond à des zones géographiques et des caractéristiques d'éclairement prédéfinies. On comprend que le système d'éclairage peut être modifié/complété de manière à produire autant de zones d'éclairement que l'on souhaite, chacune présentant, le cas échéant, des caractéristiques d'éclairement qui lui sont propres. Par exemple, il peut être prévu une zone supplémentaire, s'étendant selon l'environnement immédiat de la seconde zone d'éclairement 1402, sur laquelle les caractéristiques d'éclairement diffèrent de celles de la première et de la seconde zone d'éclairement, par exemple avec un niveau d'éclairement voisin de 300 lux et une uniformité supérieure à 0,5.

## Revendications

1. Système d'éclairage comprenant :
- un jeu de premières dalles lumineuses (20;200) suspendues, réparties selon un motif régulier ;
- un jeu de secondes dalles lumineuses (30;300) suspendues, intercalées dans ledit motif régulier ;
- un jeu de capteurs de lumière (207;307) opérant chacun sous une dalle lumineuse respective (20,200;30,300), à une hauteur prédéfinie ;
- une pluralité de modules de commande (610-i;620-j) capables chacun de commander en courant une dalle lumineuse respective (20,200;30,300) ;
- un contrôleur (600) capable de commander conjointement les modules de commande (610-i;620-j) des premières et secondes dalles ;
**caractérisé en ce que** :
- les modules (610-i) des premières dalles (20;200) sont munis d'un premier état, où ils exécutent chacun une première loi primaire (900) commandant un niveau de courant calculé de manière que les premières dalles (20;200) produisent conjointement un premier niveau d'éclairement nominal sur une zone d'éclairement prédéfinie (1200), de manière sensiblement uniforme, ainsi que d'un second état, où chaque module exécute une première loi secondaire (1000) commandant un niveau de courant respectif calculé sur la base d'une comparaison entre l'éclairement mesuré sous la dalle respective et une première valeur de consigne respective ;
- les modules (620-j) des secondes dalles (30;300) sont munis d'un premier état, où ils exécutent chacun une seconde loi primaire (900) commandant un niveau de courant calculé de manière que les secondes dalles (30;300) produisent un second niveau d'éclairement sur une ou plusieurs sous-zones (1210) à l'intérieur de ladite zone d'éclairement prédéfinie (1200), ainsi que d'un second état où chaque module exécute une seconde loi secondaire (1000) commandant un niveau de courant respectif calculé sur la base d'une comparaison entre l'éclairement mesuré sous la dalle respective et une seconde valeur de consigne respective ;
- le contrôleur (600) est agencé pour commander conjointement les modules de commande (610, 620) des premières (20;200) et secondes dalles (30;300) d'abord dans leur premier état, en mémorisant les niveaux d'éclairement mesurés sous les dalles lumineuses (20;200,30;300) par leurs capteurs respectifs, puis pour commuter certains au moins des modules de commande (610-i, 620-j) vers le second état, avec des valeurs de consigne calculées, en partie au moins, sur la base des niveaux d'éclairement mémorisés.

2. Système selon la revendication 1, dans lequel certaines au moins des premières dalles lumineuses (20; 200) et des secondes dalles lumineuses (30; 300) sont réalisées sous la forme de dalles de faux plafond équipées d'un ou plusieurs dispositifs d'éclairage (203;303).

3. Système selon l'une des revendications 1 et 2, dans lequel certaines au moins des premières dalles lumineuses (20; 200) et des secondes dalles lumineuses (30; 300) sont équipées de dispositifs d'éclairages (203;303) à diodes électroluminescentes (205;305).

4. Système selon l'une des revendications précédentes, dans lequel certains au moins des capteurs de lumière (207;307) sont intégrés dans leur dalle lumineuse respective (200;300).

5. Système selon l'une des revendications précédentes, dans lequel les premières dalles lumineuses (20;200) et les secondes dalles lumineuses (30;300) présentent des dimensions d'encombrement analogues les unes aux autres.

6. Système selon l'une des revendications précédentes, dans lequel les premières dalles lumineuses (20;200) présentent des puissances d'éclairement théorique analogues les unes aux autres, les secondes dalles lumineuses (30;300) présentent des puissances d'éclairement théorique analogues les unes aux autres, et la puissance d'éclairement théorique des secondes dalles (30;300) est supérieur à la puissance d'éclairement théorique des premières dalles (20;200).

7. Système selon l'une des revendications précédentes, dans lequel chacune des premières dalles (20;200) et des secondes dalles (30;300) présente au moins deux connecteurs électriques (209,309) et les dalles sont reliées les unes aux autres par l'intermédiaire de ces connecteurs.

8. Système selon l'une des revendications précédentes, dans lequel ledit premier niveau d'éclairement nominal est sensiblement inférieur audit second niveau d'éclairement.

9. Système selon la revendication 8, dans lequel ledit premier niveau d'éclairement nominal est voisin de 200 lux tandis que ledit second niveau d'éclairement est voisin de 500 lux.

10. Kit permettant la réalisation d'un système d'éclairage selon la revendication 1 comprenant :
- un jeu de premières dalles lumineuses (20;200) aptes à être suspendues ;
- un jeu de secondes dalles lumineuses (30;300) aptes à être suspendues ;
- un jeu de capteurs de lumière (207;307) ;
- une pluralité de modules de commande (610-i;620-j) destinés chacun à commander en courant une dalle lumineuse respective (20,200;30,300) ;
- un contrôleur (600) apte à commander conjointement les modules de commande (610-i;620-j) des premières (20;200) et secondes dalles (30;300) ;
dans lequel :
- les modules destinés aux premières dalles sont munis d'un premier état, où ils exécutent chacun une première loi primaire (900) commandant un niveau de courant calculé en vue de produire un premier niveau d'éclairement nominal, ainsi que d'un second état, où ils exécutent chacun une première loi secondaire (1000) commandant un niveau de courant respectif calculé sur la base d'une comparaison entre une valeur d'éclairement mesurée et une première valeur de consigne respective ;
- les modules (620-j) destinés aux secondes dalles (30;300) sont munis d'un premier état, où ils exécutent chacun une seconde loi primaire (900) commandant un niveau de courant calculé en vue de produire un second niveau d'éclairement, ainsi que d'un second état, où ils exécutent chacun une seconde loi secondaire (1000) commandant un niveau de courant respectif calculé sur la base d'une comparaison entre un éclairement mesuré et une seconde valeur de consigne respective ;
- le contrôleur (600) est agencé de manière à pouvoir commander conjointement les modules de commande (610,620) destinés aux premières (20;200) et secondes dalles (30;300) d'abord dans leur premier état, en mémorisant des niveaux d'éclairement mesurés par des capteurs respectifs, puis pour commuter certains au moins des modules de commande (610-i, 620-j) vers le second état, avec des valeurs de consigne calculées, en partie au moins, sur la base des niveaux d'éclairement mémorisés.

## Patentansprüche

1. Beleuchtungssystem, umfassend:
- einen Satz von ersten aufgehängten Leuchtplatten (20; 200), die nach einem regelmäßigen Muster verteilt sind;
- einen Satz von zweiten aufgehängten Leuchtplatten (30; 300), die in dem regelmäßigen Muster eingefügt sind;
- einen Satz von Lichtsensoren (207; 307), die jeweils unter einer jeweiligen Leuchtplatte (20, 200; 30, 300) in einer vordefinierten Höhe betreibbar sind;
- eine Mehrzahl von Steuermodulen (610-i;620-j), die jeweils in der Lage sind, eine entsprechende Leuchtplatte (20, 200; 30, 300) mit Strom zu steuern;
- eine Steuerung (600), die in der Lage ist, die Steuermodule (610-i;620-j) der ersten und zweiten Platten gemeinsam zu steuern;
**dadurch gekennzeichnet, dass:**
- die Module (610-i) der ersten Platten (20;200) mit einem ersten Zustand versehen sind, in dem sie jeweils ein erstes Primärgesetz (900) ausführen, das einen Strompegel steuert, der so berechnet wird, dass die ersten Platten (20;200) gemeinsam eine erste nominale Beleuchtungsstärke über einen vordefinierten Beleuchtungsbereich (1200), im Wesentlichen gleichmäßig, erzeugen, sowie mit einem zweiten Zustand, wobei jedes Modul ein erstes Sekundärgesetz (1000) ausführt, das einen entsprechenden Strompegel steuert, der auf der Grundlage eines Vergleichs zwischen der unter der jeweiligen Platte gemessenen Beleuchtung und einem ersten jeweiligen Sollwert berechnet wird;
- die Module (620-j) der zweiten Platten (30; 300) mit einem ersten Zustand versehen sind, in dem sie jeweils ein zweites Primärgesetz (900) ausführen, das einen Strompegel steuert, der so berechnet wird, dass die zweiten Platten (30;300) eine zweite Beleuchtungsstärke auf einem oder mehreren Teilbereichen (1210) innerhalb des vordefinierten Beleuchtungsbereichs (1200) erzeugen, sowie mit einem zweiten Zustand, in dem jedes Modul ein zweites Sekundärgesetz (1000) ausführt, das einen entsprechenden Strompegel steuert, der auf der Grundlage eines Vergleichs zwischen der unter der jeweiligen Platte gemessenen Beleuchtung und einem jeweiligen zweiten Sollwert berechnet wird;
- die Steuerung (600) angeordnet ist, um die Steuermodule (610, 620) der ersten (20; 200) und zweiten Platten (30; 300) zunächst in ihrem ersten Zustand gemeinsam zu steuern, indem sie die unter den Leuchtplatten (20; 200, 30; 300) gemessenen Beleuchtungsstärken durch ihre jeweiligen Sensoren speichert, um dann zumindest einige der Steuermodule (610-i, 620-j) in den zweiten Zustand zu schalten, wobei Sollwerte zumindest teilweise auf der Grundlage der gespeicherten Beleuchtungsstärken berechnet werden.

2. System nach Anspruch 1, wobei mindestens ein Teil der ersten Leuchtplatten (20; 200) und zweiten Leuchtplatten (30; 300) in Form von Zwischendeckenplatten hergestellt sind, die mit einer oder mehreren Beleuchtungsvorrichtung(en) (203; 303) ausgestattet sind.

3. System nach einem der Ansprüche 1 und 2, wobei mindestens einige der ersten Leuchtplatten (20; 200) und zweiten Leuchtplatten (30; 300) mit LED-Beleuchtungsvorrichtungen (203; 303) (205; 305) ausgestattet sind.

4. System nach einem der vorstehenden Ansprüche, wobei mindestens einige der Lichtsensoren (207; 307) in ihre jeweiligen Leuchtplatten (200; 300) integriert sind.

5. System nach einem der vorstehenden Ansprüche, wobei die ersten Leuchtplatten (20; 200) und die zweiten Leuchtplatten (30; 300) gleiche Gesamtabmessungen zueinander aufweisen.

6. System nach einem der vorstehenden Ansprüche, wobei die ersten Leuchtplatten (20; 200) gleiche theoretische Beleuchtungsleistungen zueinander aufweisen, die zweiten Leuchtplatten (30; 300) gleiche theoretische Beleuchtungsleistungen zueinander aufweisen und die theoretische Beleuchtungsleistung der zweiten Platten (30; 300) größer ist als die theoretische Beleuchtungsleistung der ersten Platten (20; 200).

7. System nach einem der vorstehenden Ansprüche, wobei jede der ersten Platten (20; 200) und der zweiten Platten (30; 300) mindestens zwei elektrische Verbinder (209, 309) aufweist und die Platten über diese Verbinder miteinander verbunden sind.

8. System nach einem der vorstehenden Ansprüche, wobei die erste nominale Beleuchtungsstärke wesentlich niedriger ist als die zweite Beleuchtungsstärke.

9. System nach Anspruch 8, wobei die erste nominale Beleuchtungsstärke etwa 200 Lux beträgt, während die zweite Beleuchtungsstärke etwa 500 Lux beträgt.

10. Bausatz, der die Ausführung eines Beleuchtungssystems nach Anspruch 1 ermöglicht, umfassend:
- einen Satz von ersten Leuchtplatten (20; 200), die zum Aufhängen geeignet sind;
- einen Satz von zweiten Leuchtplatten (30; 300), die zum Aufhängen geeignet sind;
- einen Satz Lichtsensoren (207;307);
- eine Mehrzahl von Steuermodulen (610-i;620-j), die jeweils dazu bestimmt sind, eine entsprechende Leuchtplatte (20, 200; 30, 300) mit Strom zu steuern;
- eine Steuerung (600), die dazu geeignet ist, die Steuermodule (610-i;620-j) der ersten (20;200) und zweiten Platten (30;300) gemeinsam zu steuern;
wobei:
- die Module für die ersten Platten mit einem ersten Zustand versehen sind, in dem sie jeweils ein erstes Primärgesetz (900) ausführen, das einen berechneten Strompegel steuert, um eine erste nominale Beleuchtungsstärke zu erzeugen, sowie mit einem zweiten Zustand, in dem sie jeweils ein erstes Sekundärgesetz (1000) ausführen, das einen entsprechenden Strompegel steuert, der auf der Grundlage eines Vergleichs zwischen einem gemessenen Beleuchtungswert und einem jeweiligen ersten Sollwert berechnet wird;
- die Module (620-j) für die zweiten Platten (30; 300) mit einem ersten Zustand versehen sind, in dem sie jeweils ein zweites Primärgesetz (900) ausführen, das einen berechneten Strompegel steuert, um eine zweite Beleuchtungsstärke zu erzeugen, sowie mit einem zweiten Zustand, in dem sie jeweils ein zweites Sekundärgesetz (1000) ausführen, das einen jeweiligen Strompegel steuert, der auf der Grundlage eines Vergleichs zwischen einer gemessenen Beleuchtung und einem jeweiligen zweiten Sollwert berechnet wird;
- die Steuerung (600) so angeordnet ist, dass sie die Steuermodule (610, 620) für die ersten (20; 200) und zweiten Platten (30; 300) zunächst in ihrem ersten Zustand gemeinsam steuern kann, indem sie Beleuchtungsstärken speichert, die durch entsprechende Sensoren gemessen werden, um dann zumindest einige der Steuermodule (610-i, 620-j) in den zweiten Zustand zu schalten, wobei die Sollwerte zumindest teilweise auf der Grundlage der gespeicherten Beleuchtungsstärken berechnet werden.

## Claims

1. Lighting system comprising:
- a set of suspended first panel lights (20; 200) distributed in a regular pattern;
- a set of suspended second panel lights (30; 300) interspersed in said regular pattern;
- a set of light sensors (207; 307) each operating under one respective panel light (20, 200; 30, 300), at a predefined height;
- a plurality of control modules (610-i; 620-j) each capable of controlling the current of one respective panel light (20, 200; 30, 300);
- a controller (600) capable of conjointly controlling the control modules (610-i; 620-j) of the first and second lights;
**characterized in that**:
- the modules (610-i) of the first lights (20; 200) have a first state, in which they each execute a first primary law (900) controlling a current level calculated so that the first lights (20; 200) conjointly produce a nominal first illuminance level in a predefined lighting zone (1200), substantially uniformly, and a second state, in which each module executes a first secondary law (1000) controlling a respective current level calculated on the basis of a comparison between the illuminance measured under the respective light and a respective first setpoint value;
- the modules (620-j) of the second lights (30; 300) have a first state, in which they each execute a second primary law (900) controlling a current level calculated so that the second lights (30; 300) produce a second illuminance level in one or more sub-zones (1210) in the interior of said predefined lighting zone (1200), and a second state in which each module executes a second secondary law (1000) controlling a respective current level calculated on the basis of a comparison between the illuminance measured under the respective light and a respective second setpoint value;
- the controller (600) is arranged to conjointly control the control modules (610, 620) of the first lights (20; 200) and of the second lights (30; 300) firstly to their first state, while storing in memory the illuminance levels measured under the panel lights (20; 200, 30; 300) by their respective sensors, then to switch certain at least of the control modules (610-i, 620-j) to the second state, with setpoint values calculated, at least partially, on the basis of the stored illuminance levels.

2. System according to Claim 1, wherein certain at least of the first panel lights (20; 200) and of the second panel lights (30; 300) are produced in the form of false ceiling tiles equipped with one or more lighting devices (203; 303).

3. System according to one of Claims 1 and 2, wherein certain at least of the first panel lights (20; 200) and of the second panel lights (30; 300) are equipped with lighting devices (203; 303) comprising light-emitting diodes (205; 305).

4. System according to one of the preceding claims, wherein certain at least of the light sensors (207; 307) are integrated into their respective panel light (200; 300) .

5. System according to one of the preceding claims, wherein the first panel lights (20; 200) and the second panel lights (30; 300) have outside dimensions that are analogous to one another.

6. System according to one of the preceding claims, wherein the first panel lights (20; 200) have theoretical luminous powers that are analogous to one another, the second panel lights (30; 300) have theoretical luminous powers that are analogous to one another, and the theoretical luminous power of the second lights (30; 300) is higher than the theoretical luminous power of the first lights (20; 200).

7. System according to one of the preceding claims, wherein each of the first lights (20; 200) and of the second lights (30; 300) has at least two electrical connectors (209, 309) and the lights are connected to one another via these connectors.

8. System according to one of the preceding claims, wherein said nominal first illuminance level is substantially lower than said second illuminance level.

9. System according to Claim 8, wherein said nominal first illuminance level is in the vicinity of 200 lux whereas said second illuminance level is in the vicinity of 500 lux.

10. Kit allowing a lighting system according to Claim 1 to be produced, comprising:
- a set of first panel lights (20; 200) that are able to be suspended;
- a set of second panel lights (30; 300) that are able to be suspended;
- a set of light sensors (207; 307);
- a plurality of control modules (610-i; 620-j) each intended to control the current of one respective panel light (20, 200; 30, 300);
- a controller (600) able to conjointly control the control modules (610-i; 620-j) of the first lights (20; 200) and of the second lights (30; 300);
wherein:
- the modules intended for the first lights have a first state, in which they each execute a first primary law (900) controlling a current level calculated with a view to producing a nominal first illuminance level, and a second state, in which they each execute a first secondary law (1000) controlling a respective current level calculated on the basis of a comparison between a measured illuminance value and a respective first setpoint value;
- the modules (620-j) intended for the second lights (30; 300) have a first state, in which they each execute a second primary law (900) controlling a current level calculated with a view to producing a second illuminance level, and a second state, in which they each execute a second secondary law (1000) controlling a respective current level calculated on the basis of a comparison between a measured illuminance and a respective second setpoint value;
- the controller (600) is arranged so as to be able to conjointly control the control modules (610, 620) intended for the first lights (20; 200) and for the second lights (30; 300) firstly to their first state, while storing in memory the illuminance levels measured by the respective sensors, then to switch certain at least of the control modules (610-i, 620-j) to the second state, with setpoint values that are calculated, at least partially, on the basis of the stored illuminance levels.
